# EUROPÄISCHE PATENTSCHRIFT

(11) **EP 3 724 284 B1**
(45) Veröffentlichungstag und Bekanntmachung des Hinweises auf die Patenterteilung: **14.07.2021**
(21) Anmeldenummer: 17825441.3
(22) Anmeldetag: 13.12.2017
(51) Int. Cl.: C09D 183/10, C08G 77/452, D06M 11/77, C08G 77/455

(54) **SILICON-COPOLYMERE, DEREN HERSTELLUNG UND DEREN VERWENDUNG ZUR BEHANDLUNG VON FASERIGEN SUBSTRATEN**
SILICONE COPOLYMERS, PRODUCTION THEREOF AND USE THEREOF FOR TREATMENT OF FIBROUS SUBSTRATES
COPOLYMÈRES DE SILICIUM, LEUR PRÉPARATION ET LEUR UTILISATION POUR LE TRAITEMENT DE SUBSTRATS FIBREUX

(43) Veröffentlichungstag der Anmeldung: 21.10.2020
(73) Patentinhaber: Wacker Chemie AG, 81737 München (DE)
(72) Erfinder: LEHOTKAY, Thomas, 84453 Mühldorf (DE); EICHBERGER, Walter, 5232 Kirchberg (AT); SCHAEFER, Oliver, 84489 Burghausen (DE); SEEGER-FEICHTINGER, Inge, 84375 Kirchdorf am Inn (DE)
(74) Vertreter: Deffner-Lehner, Maria
(86) Internationale Anmeldenummer: PCT/EP2017/082682
(87) Internationale Veröffentlichungsnummer: WO 2019/114953

(56) Entgegenhaltungen:
- US-B2- 7 501 184

## Beschreibung

Die Erfindung betrifft Silicon-Copolymere, deren Herstellung und deren Verwendung zur Behandlung von faserigen Substraten.

Moderne, siliconhaltige Weichgriffmittel zur Hydrophobierung von Fasern bestehen vorwiegend aus funktionellen Siliconölen, welche beispielsweise hydrophile Gruppen oder quaternäre Ammoniumgruppen, wie z. B. aus DE 19652524 A1 bekannt, enthalten. Die quaternären Produkte sind meist nicht wasserlöslich und müssen durch zusätzliche Emulgierung in eine wässrige applizierbare Form gebracht werden, während die hydrophil-modifizierten Siloxane teilweise wasserdispergierbar sind. Letztere sind aber im Vergleich zu klassischen aminofunktionellen Siloxanen schlechter in den Weichgriffeigenschaften.

Siloxan-Copolymere, wie in US 5,001,210 A, US 2003/0032726 A1 und US 2008/0075683 A1, bei denen die Aminogruppen mit hydrophilen Gruppen kombiniert sind, zeigen den Nachteil, dass sie in mehrstufigen Syntheseschritten hergestellt werden müssen. Hierbei müssen teilweise toxische Zwischenprodukte, wie Isocyanate und deren Derivate, eingesetzt werden bzw. fallen als Zwischenprodukte an, oder aufwändige Hydrosilylierungsschritte sind notwendig. Die hydrophilen Produkte sind ferner nicht waschresistent und dahingehend auch nicht in wirtschaftlicher Weise modifizierbar. Ferner zeigen sie teilweise eine störende Eigenfarbe.

In US 7,501,184 sind Copolymere beschrieben, die durch Umsetzung von linearen Organopolysiloxanen, die mit Oxamidestergruppen terminiert sind, mit organischen Diaminen erhalten werden. Es werden hochviskose bis feste Copolymere erhalten, die in Klebstoffen, insbesondere als Heißschmelzkleber, eingesetzt werden. Diese hochviskosen Produkte sind nicht stabil emulgierbar und können daher nicht in die textile Applikationskette integriert werden.

Es bestand die Aufgabe, Silicon-Copolymere und deren Emulsionen bereitzustellen, die die oben genannten Nachteile nicht aufweisen und ohne toxische Stoffe, wie Isocyanate, hergestellt werden können und mit denen faserige Substrate, insbesondere Textilien, Fasern, Leder und Haare, ausgerüstet werden können, um ihnen gute Weichgriff- und Hydrophilie-Eigenschaften zu verleihen. Die Aufgabe wird durch die Erfindung gelöst.

Gegenstand der Erfindung ist ein Verfahren zur Behandlung von faserigen Substraten mit Zusammensetzungen enthaltend Silicon-Copolymere (A) der Formel (I) 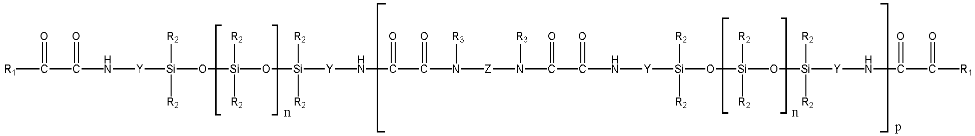 wobei
- Y: gleich oder verschieden ist und einen zweiwertigen Kohlenwasserstoffrest mit 1 bis 20 Kohlenstoffatomen, der ein oder mehrere Heteroatome, vorzugsweise Sauerstoff- oder Stickstoffatome, enthalten kann, bedeutet,
- Z: gleich oder verschieden ist und einen zweiwertigen eine Polyoxyalkylengruppe enthaltenden organischen Rest, vorzugsweise einen Rest der Formel -(R⁶O)_{w}-R⁷-, bedeutet,
- R¹: gleich oder verschieden ist und ein Rest der Formel -N(R⁴)-R⁵ (IV') oder -O-R⁵ (V'), vorzugsweise ein Rest der Formel -N(R⁴)-R⁵ (IV') ist,
- R²: gleich oder verschieden ist und einen einwertigen Kohlenwasserstoffrest mit 1 bis 18 Kohlenstoffatomen, der Halogen- oder Sauerstoffatome enthalten kann, bedeutet,
- R³: gleich oder verschieden ist und ein Wasserstoffatom oder einen einwertigen Kohlenwasserstoffrest mit 1 bis 20 Kohlenstoffatomen bedeutet,
- R⁴: ein Wasserstoffatom, einen C₁₋₁₈-Alkylrest oder einen Kohlenwasserstoffrest mit 4 bis 18 Kohlenstoffatomen, der ein oder mehrere Sauerstoff- oder Stickstoffatome enthält, bedeutet und
- R⁵: einen C₁₋₁₈-Alkylrest oder einen Kohlenwasserstoffrest mit 4 bis 18 Kohlenstoffatomen, der ein oder mehrere Sauerstoffoder Stickstoffatome enthält, bedeutet, oder R⁴ und R⁵ in Formel (IV') zusammen einen zweiwertigen Kohlenwasserstoffrest, der ein oder mehrere Sauerstoff- oder Stickstoffatome enthalten kann, bedeuten,
- R⁶: gleich oder verschieden ist und einen C₁-C₁₀-Alkylenrest, vorzugsweise einen C₂-C₃-Alkylenrest, bevorzugt einen Ethylen- oder iso-Propylenrest bedeutet, und
- R⁷: einen C₁-C₁₀-Alkylenrest, vorzugsweise einen C₂-C₃-Alkylenrest, bevorzugt einen Ethylen- oder iso-Propylenrest bedeutet,
- n: eine ganze Zahl von 10 bis 2000, vorzugsweise 10 bis 300, ist,
- p: eine ganze Zahl von 1 bis 5, vorzugsweise 1 bis 2, bevorzugt 1, ist und
- w: durchschnittlich 2,5 bis 80, vorzugsweise 10 bis 30, ist.

Gegenstand der Erfindung sind weiterhin Silicon-Copolymere (A) der Formel (I) 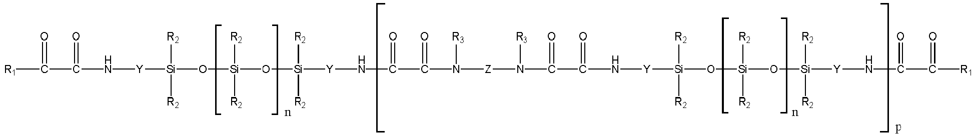 wobei
Y, Z, R¹, R², R³, R⁴, R⁵, R⁶, R⁷, n, p und w die oben dafür angegebene Bedeutung haben.

Gegenstand der Erfindung ist weiterhin ein Verfahren zur Herstellung der Silicon-Copolymeren, indem
(1) mit Oxamidoestergruppen terminierte Organopolysiloxane der Formel (II) 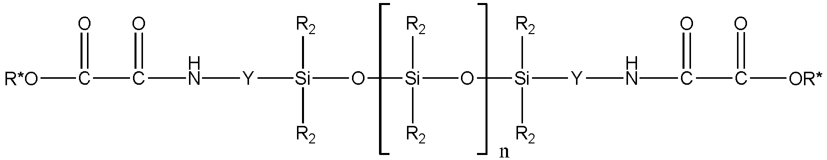
   wobei R², Y und n die oben dafür angegebene Bedeutung haben und
   R* ein einwertiger Kohlenwasserstoffrest mit 1 bis 18 Kohlenstoffatomen oder ein Rest R⁵ ist, wobei R⁵ die oben dafür angegebene Bedeutung hat, mit
(2) Polyetheraminen der Formel

   R³HN-Z-NHR³ (III),

   wobei R³ und Z die oben dafür angegebene Bedeutung haben und
(3) primären oder sekundären Aminen der Formel

   H-N(R⁴)-R⁵ (IV)

   oder Alkoholen der Formel H-O-R⁵ (V),

   wobei R⁴ und R⁵ die oben dafür angegebene Bedeutung haben, umgesetzt werden.

Die erfindungsgemäßen Silicon-Copolymere weisen im Unterschied zu den in US 7,501,184 beschriebenen hochmolekularen Copolymeren ein deutlich niedrigeres Molekulargewicht auf. Vorzugsweise haben die Silicon-Copolymere ein Molekulargewicht Mn (Zahlenmittel) von 4000 - 30000 g/mol. Das zahlenmittlere Molekulargewicht Mn wird dabei im Rahmen der vorliegenden Erfindung vorzugsweise mittels Size Exclusion Chromatography (SEC) bestimmt. Bevorzugt wird das zahlenmittlere Molekulargewicht Mn mittels Size Exclusion Chromatography (SEC) gegen Polystyrol-Standard, in THF, bei 60°C, Flow Rate 1,2 ml/min und Detektion mit RI (Brechungsindex-Detektor) auf einem Säulenset Styragel HR3-HR4-HR5-HR5 von Waters Corp. USA mit einem Injektionsvolumen von 100 µl bestimmt.

Beispiele für den Rest Y sind zweiwertige Kohlenwasserstoffreste wie die Methylengruppe, die 1,2-Ethylengruppe, die 1,3-Propylengruppe, die 1,3-Butylengruppe, die 1,4-Butylengruppe, die 1,5-Pentylengruppe und die 1,6-Hexylengruppe.

Weitere Beispiele für den Rest Y sind Alkylenreste, die ein oder mehrere Heteroatome enthalten, wie z.B. die -C₂H₄-NH-C₃H₆- Gruppe.

Ein bevorzugtes Beispiel ist die 1,3-Propylengruppe.

Beispiele für den Rest Z sind zweiwertige Kohlenwasserstoffoxyreste, wie die Polyethylenglykolreste oder Polypropylenglykolreste oder Mischungen aus Polyethylenglykol- und Polypropylenglykolresten. Der Rest Z hat bevorzugt ein Molekulargewicht von 120 g/mol bis 4.500 g/mol, ganz besonders bevorzugt ein Molekulargewicht von 500 g/mol bis 1800 g/mol.

Beispiele für Reste R² sind Alkylreste, wie der Methyl-,Ethyl-, n-Propyl-, iso-Propyl-, n-Butyl-, iso-Butyl-, tert.-Butyl-, n-Pentyl-, iso-Pentyl-, neo-Pentyl-, tert.-Pentylrest, Hexylreste, wie der n-Hexylrest, Heptylreste, wie der n-Heptylrest, Octylreste, wie der n-Octylrest und iso-Octylreste, wie der 2,2,4-Trimethylpentylrest, Nonylreste, wie der n-Nonylrest, Decylreste, wie der n-Decylrest, Dodecylreste, wie der n-Dodecylrest, und Octadecylreste, wie der n-Octadecylrest; Cycloalkylreste, wie Cyclopentyl-, Cyclohexyl-, Cycloheptyl- und Methylcyclohexylreste; Alkenylreste, wie der Vinyl-, 5-Hexenyl-, Cyclohexenyl-, 1-Propenyl-, Allyl-, 3-Butenyl- und 4-Pentenylrest; Alkinylreste, wie der Ethinyl-, Propargyl- und 1-Propinylrest; Arylreste, wie der Phenyl-, Naphthyl-, Anthryl- und Phenanthrylrest; Alkarylreste, wie o-, m- und p-Tolylreste, Xylylreste und Ethylphenylreste; und Aralkylreste, wie der Benzylrest, der α- und der β-Phenylethylrest.

Ein bevorzugtes Beispiel für den Rest R² ist der Methylrest.

Die oben genannten Reste R² können auch ein oder mehrere Halogenatome oder Sauerstoffatome enthalten.

Beispiele für Kohlenwasserstoffreste R² gelten auch für Kohlenwasserstoffreste R³. Vorzugsweise ist R³ ein Wasserstoffatom oder ein C₁-C₆-Alkylrest, bevorzugt ein Wasserstoffatom.

Der Rest R¹ der Formel -N(R⁴)-R⁵ (IV') stammt von einem primären oder sekundären Amin der Formel H-N(R⁴)-R⁵ (IV) minus das am Stickstoffatom gebundene H-Atom.

Der Rest R¹ der Formel -O-R⁵ (V') stammt von einem Alkohol der Formel H-O-R⁵ (V) minus das am Sauerstoffatom gebundene H-Atom. Die Reste R⁴ und R⁵ im Rest R¹ können gleiche oder verschiedene C₁-C₁₈-Alkylreste sein. Die Beispiele für C₁-C₁₈-Alkylreste R² gelten dabei auch für C₁-C₁₈-Alkylreste R⁴ und R⁵. R⁴ und R⁵ können dabei in Formel (IV') gleichzeitig Bestandteil eines cyclischen Restes sein.

Die Reste R⁴ und R⁵ im Rest R¹ können auch einen Kohlenwasserstoffrest mit 4 bis 18 Kohlenstoffatomen, der vorzugsweise mindestens ein Heteroatom Stickstoff oder Sauerstoff enthält, bedeuten. R⁴ und R⁵ können dabei in Formel (IV') gleichzeitig Bestandteil eines heterocyclischen Restes sein.

Beispiele für solche Reste R⁴ und R⁵ sind Reste der Formel - (CH₂)₃-N(CH₃)₂, -(CH₂)₃-OCH₂CH₃ und - (CH₂)₂-OCH₂CH₃.

Bevorzugte Beispiele für Amine der Formel H-N(R⁴)-R⁵ (IV) sind primäre Amine, wie

H-NH- (CH₂) ₃-N(CH₃)₂

(N¹,N¹-Dimethylpropan-1,3-diamin)
und sekundäre Amine, wie

H-N-[(CH₂)₃-N(CH₃)₂]₂

(N¹-(3-(Dimethylamino)propyl)-N³,N³-dimethylpropan-1,3-diamin)

primäre Polyetheramine wie

H-NH-(CH₂)₃-OCH₂CH₃, H-NH-(CH₂)₂-OCH₂CH₃,

sekundäre Polyetheramine wie

NH-[(CH₂)₃-OCH₂CH₃]₂, NH-[(CH₂)₂-OCH₂CH₃]₂.

Die bevorzugten Reste R¹ entsprechen dabei den oben genannten Aminen minus ein am Stickstoffatom N gebundenes H-Atom, oder den oben genannten Alkoholen minus ein am Sauerstoffatom O gebundenes O-Atom,
also sind bevorzugte Reste R¹ solche der Formel
- NH-(CH₂)₃-N(CH₃)₂ und NH-(CH₂)₃-OCH₂CH₃
- N-[(CH₂)₃-N(CH₃)₂]₂ und -N-[(CH₂)₃-OCH₂CH₃]₂.

Die erfindungsgemäßen Zusammensetzungen, mit denen die faserigen Substrate behandelt werden, können Lösungen von erfindungsgemäßen Silicon-Copolymeren (A) in organischen Lösungsmitteln sein.

Vorzugsweise sind die erfindungsgemäßen Zusammensetzungen, mit denen die faserigen Substrate behandelt werden, wässrige Emulsionen enthaltend erfindungsgemäße Silicon-Copolymere (A) Emulgatoren (B) und/oder Coemulgatoren (B')und Wasser (C).

Gegenstand der Erfindung sind daher wässrige Emulsionen enthaltend erfindungsgemäße Silicon-Copolymere (A) Emulgatoren (B) und/oder Coemulgatoren (B') und Wasser (C).

Als Emulgatoren (B) können nicht-ionische, anionische oder kationische Emulgatoren oder auch deren Gemische eingesetzt werden.

Die erfindungsgemäßen wässrigen Emulsionen enthalten an sich bekannte Emulgatoren und deren Mischungen.

Als anionische Emulgatoren eignen sich besonders:
1. Alkylsulfate, besonders solche mit einer Kettenlänge von 8 bis 18 C-Atomen, Alkyl- und Alkarylethersulfate mit 8 bis 18 C-Atomen im hydrophoben Rest und 1 bis 40 Ethylenoxid (EO)- bzw. Propylenoxid(PO) einheiten.
2. Sulfonate, besonders Alkylsulfonate mit 8 bis 18 C-Atomen, Alkylarylsulfonate mit 8 bis 18 C-Atomen, Tauride, Ester und Halbester der Sulfobernsteinsäure mit einwertigen Alkoholen oder Alkylphenolen mit 4 bis 15 C-Atomen; gegebenenfalls können diese Alkohole oder Alkylphenole auch mit 1 bis 40 EO-Einheiten ethoxyliert sein.
3. Alkali- und Ammoniumsalze von Carbonsäuren mit 8 bis 20 C-Atomen im Alkyl-, Aryl-, Alkaryl- oder Aralkylrest.
4. Phosphorsäureteilester und deren Alkali- und Ammoniumsalze, besonders Alkyl- und Alkarylphosphate mit 8 bis 20 C-Atomen im organischen Rest, Alkylether- bzw. Alkaryletherphosphate mit 8 bis 20 C-Atomen im Alkyl- bzw. Alkarylrest und 1 bis 40 EO-Einheiten.

Als nicht-ionische Emulgatoren eignen sich besonders:
5. Polyvinylalkohol, der noch 5 bis 50 %, vorzugsweise 8 bis 20 % Vinylacetateinheiten aufweist, mit einem Polymerisationsgrad von 500 bis 3000.
6. Alkylpolyglycolether, vorzugsweise solche mit 8 bis 40 EO-Einheiten und Alkylresten von 8 bis 20 C-Atomen.
7. Alkylarylpolyglycolether, vorzugsweise solche mit 8 bis 40 EO-Einheiten und 8 bis 20 C-Atomen in den Alkyl- und Arylresten.
8. Ethylenoxid/Propylenoxid(EO/PO)-Blockcopolymere, vorzugsweise solche mit 8 bis 40 EO- bzw. PO-Einheiten.
9. Additionsprodukte von Alkylaminen mit Alkylresten von 8 bis 22 C-Atomen mit Ethylenoxid oder Propylenoxid.
10. Fettsäuren mit 6 bis 24 C-Atomen.
11. Alkylpolyglykoside der allgemeinen Formel R*-O-Z_{O}, worin R* einen linearen oder verzweigten, gesättigten oder ungesättigten Alkylrest mit im Mittel 8 - 24 C-Atomen und Z_{O} einen Oligoglykosidrest mit im Mittel o = 1 - 10 Hexose- oder Pentoseeinheiten oder Gemischen davon bedeuten.
12. Naturstoffe und deren Derivate, wie Lecithin, Lanolin, Saponine, Cellulose; Cellulosealkylether und Carboxyalkylcellulosen, deren Alkylgruppen jeweils bis zu 4 Kohlenstoffatome besitzen.
13. Polare Gruppen enthaltende lineare Organo(poly)siloxane, insbesondere solche mit Alkoxygruppen mit bis zu 24 C-Atomen und/oder bis zu 40 EO- und/oder PO-Gruppen.

Als kationische Emulgatoren eignen sich besonders:
14. Salze von primären, sekundären und tertiären Fettaminen mit 8 bis 24 C-Atomen mit Essigsäure, Schwefelsäure, Salzsäure und Phosphorsäuren.
15. Quarternäre Alkyl- und Alkylbenzolammoniumsalze, insbesondere solche, deren Alkylgruppen 6 bis 24 C-Atome besitzen, insbesondere die Halogenide, Sulfate, Phosphate und Acetate.
16. Alkylpyridinium-, Alkylimidazolinium- und Alkyloxazoliniumsalze, insbesondere solche, deren Alkylkette bis zu 18 C-Atome besitzt, speziell die Halogenide, Sulfate, Phosphate und Acetate.

Als Ampholytische Emulgatoren eignen sich besonders:
17. Langkettig substituierte Aminosäuren, wie N-Alkyl-di-(aminoethyl-)glycin oder N-Alkyl-2-aminopropionsäuresalze.
18. Betaine, wie N-(3-Acylamidopropyl)-N,N-dimethylammoniumsalze mit einem C₈-C₁₈-Acylrest und Alkyl-imidazolium-Betaine.

Bevorzugt als Emulgatoren sind nichtionische Emulgatoren, insbesondere die vorstehend unter 6. aufgeführten Alkylpolyglycolether, die unter 9. aufgeführten Additionsprodukte von Alkylaminen mit Ethylenoxid oder Propylenoxid, die unter 11. aufgeführten Alkylpolyglykoside und die unter 5. aufgeführten Polyvinylalkohole.

Emulgatoren werden dabei in Mengen von 1 Gew.-% bis 70 Gew.-%, bezogen auf das Gesamtgewicht der wässrigen Emulsionen eingesetzt.

Die wässrigen Emulsionen enthalten erfindungsgemäße Copolymere (A) vorzugsweise in Mengen von 0,5 Gew.-% bis 80 Gew.-%, bezogen auf das Gesamtgewicht der wässrigen Emulsionen.

Die erfindungsgemäßen wässrigen Emulsionen können noch weitere Stoffe, wie Polyethylenglykole, Polypropylenglykole und Polyethylen-Polypropylenglykole und deren Mischungen, sowie Säuren, enthalten. Beispiele für Säuren sind Carbonsäuren, wie Essigsäure, Ameisensäure, Zitronensäure, Äpfelsäure und Milchsäure.

Die erfindungsgemäßen wässrigen Emulsionen können als weitere Stoffe Lösungsmittel oder Co-Emulgatoren (B') enthalten. Beispiele für nichtwässrige Lösungsmittel oder Co-Emulgatoren sind 1-Pentanol, 1-Hexanol, 1-Octanol, Propandiol, 1,3-Butandiol, 1,2-Hexandiol, 2-Ethylhexan-1,3-diol, 1,2-Octandiol, Glycerin, Diethylenglykolmethylether, Diethylenglykolethylether, Diethylenglykolmono-n-butylether, Propylenglykolmethylether.

Die beim erfindungsgemäßen Verfahren eingesetzten Oxamidoestergruppen terminierte Organopolysiloxane (1) der Formel (II) können nach den in US 7,501,184 B2 (incorporated by reference), insbesondere Spalte 13, Zeile 14 bis 48, beschriebenem Verfahren hergestellt werden. Dem Fachmann sind auch andere Verfahren bekannt.

Beispiele für die beim erfindungsgemäßen Verfahren eingesetzten Polyetheramine (2) sind Jeffamine® Diamine der Serie D und ED, käuflich erwerblich bei der Fa. Huntsman, wie Jeffamine® D-230, Jeffamine® D-400, Jeffamine® D-2000, Jeffamine® HK 511, Jeffamine® ED-600, Jeffamine® ED-900 und Jeffamine® ED-2003.

Beim erfindungsgemäßen Verfahren werden Polyetheramine (2) in Mengen von vorzugsweise 0,3 bis 0,8 Mol, bevorzugt 0,4 bis 0,6, besonders bevorzugt 0,5 Mol, Aminogruppe in (2) pro Mol Oxamidoestergruppe in Organopolysiloxan (1) eingesetzt.

Bevorzugt werden beim erfindungsgemäßen Verfahren als Komponente (3) primäre oder sekundäre Amine der Formel (IV) eingesetzt.

Beim erfindungsgemäßen Verfahren werden primäre oder sekundäre Amine (3) in Mengen von vorzugsweise 0,2 bis 0,7 Mol, bevorzugt 0,4 bis 0,6 Mol, besonders bevorzugt 0,5 Mol, Aminogruppe in (3) pro Mol Oxamidoestergruppe in Organopolysiloxan (1) eingesetzt.

Bevorzugt werden die in Organopolysiloxan (1) enthaltenen Oxamidoestergruppen zu mindestens 80 %, bevorzugt zu mindestens 90 %, ganz besonders bevorzugt zu mindestens 95 % mit den in (2) und (3) enthaltenen Aminogruppen umgesetzt.

Beim erfindungsgemäßen Verfahren werden die mit Oxamidoestergruppen terminierten Organopolysiloxane (1) vorzugsweise vorgelegt und die Polyetheramine (2) und die Amine (3) können zusammen zugegeben werden oder die Amine (3) können zuerst zugegebenen werden und anschließend die Polyetheramine (2) oder die Polyetheramine (2) können zuerst zugegeben werden und anschließend die Amine (3). Bevorzugt werden zuerst die Amine (3) und dann die Polyetheramine (2) zugegeben.

Vorzugsweise wird der bei der Umsetzung entstehende Alkohol entfernt, bevorzugt destillativ.

Das erfindungsgemäße Verfahren zur Herstellung der Silicon-Copolymere (A) wird vorzugsweise bei Temperaturen von 0°C bis 100°C, bevorzugt 15°C bis 60°C, durchgeführt. Das erfindungsgemäße Verfahren wird vorzugsweise beim Druck der umgebenden Atmosphäre, wie bei etwa 1020 hPa, durchgeführt, es kann aber auch bei höheren oder niedrigeren Drücken durchgeführt werden.

Das erfindungsgemäße Verfahren zur Herstellung der Silicon-Copolymere (A) kann diskontinuierlich, halbkontinuierlich oder kontinuierlich durchgeführt werden.

Beispiele für faserige Substrate, die mit den Zusammensetzungen enthaltend die erfindungsgemäßen Silicon-Copolymere (A) behandelt werden, sind natürliche oder synthetisch hergestellte Fasern, Garne, Stränge, Seile, textile Flächengebilde wie Vliese, Matten, gewebte, geknüpfte, gewirkte oder gestrickte Textilien, Leder und Kunstleder, sowie Haare. Bevorzugte faserige Substrate sind Textilien. Für den Auftrag der erfindungsgemäßen Zusammensetzung können die Textilien in Form von Einzelfasern, Faserbündeln, Füllfasern, Garnen, Teppichen, Stoffbahnen oder Kleidungsstücken oder Teilen von Kleidungsstücken vorliegen.

Die Textilien können aus Baumwolle, Wolle, Mischpolymere von Vinylacetat, Rayon, Hanf, natürlicher Seide, Polypropylen, Polyethylen, Polyester, Polyurethan, Polyamid, Aramid, Polyimid, Polyacrylat, Polyacrylnitril, Polylactid, Polyvinylchlorid, Glasfasern, Keramikfasern, Cellulose oder deren Gemische bestehen.

Das Auftragen auf die zu behandelnden faserigen Substrate, bevorzugt Textilien, kann in beliebiger für die Behandlung von faserigen Substraten, wie Textilien, geeigneter und vielfach bekannter Weise, z.B. durch Tauchen, Streichen, Gießen, Sprühen, Aufwalzen, Klotzen, Drucken oder Schaumauftrag erfolgen.

In der Anwendung kann die erfindungsgemäße Zusammensetzung mit gebrauchsüblichen Textilhilfsmitteln, wie zum Beispiel Bindemittel aus Melamin- oder Methylolharzen, Polyethylenen, Polyurethanen, Polyacrylaten, Polyvinylalkoholen, Polyvinylacetaten, optischen Aufhellern, Mattierungsmitteln, Elektrolyten, Benetzungshilfsmitteln, Plasten, Bleichmitteln, Antistatika, Dispersionen von Metalloxiden, Silikaten, Parfümölen, Farbstoffen und Konservierungsmitteln, Entschäumern oder weiteren Hydrophobier- und Oleophobierhilfsmitteln, wie perfluorierten Kohlenwasserstoffen, kombiniert werden.

Ferner können die erfindungsgemäßen Produkte mit Textilweichmachern auf Basis von Polysiloxanen und organischen Weichmachern wie anionischen, kationischen und nichtionogenen Weichmachern und deren Mischungen verwendet werden.

Hierzu zählen funktionelle und nichtfunktionelle Silikone, Salze der Metallseifen, Alkylpolysulfonate, Sulfosuccinate und deren Derivate, Esterquats, Sulfoalkylenfettsäureamide, Alkylammoniumsulfate, Triethanolaminfettsäureester, Fettsäurepolyglycolester, Fettaminpolyalkylenaddukte, Fettsäureamidpolyalkylenaddukte, und Dispersionen von Paraffinen, Wachsen, Polyethylenen und Polyestern.

Die behandelten faserigen Substrate, bevorzugt Textilien, werden vorzugsweise bei Temperaturen von 20°C bis 200°C, bevorzugt 100°C bis 180°C, trocknen gelassen.

Die erfindungsgemäßen Silicon-Copolymere (A) bzw. die Zusammensetzungen enthaltend die erfindungsgemäßen Silicon-Copolymere (A) haben den Vorteil, dass die mit ihnen behandelten faserigen Substrate, wie Textilien, hydrophil sind und einen weichen Griff aufweisen sowie einfach emulgierbar sind.

In den nachstehend beschriebenen Beispielen beziehen sich alle Angaben von Teilen und Prozentsätzen, falls nicht anders angegeben, auf das Gewicht. Des Weiteren beziehen sich alle Viskositätsangaben auf eine Temperatur von 25°C. Sofern nicht anders angegeben, werden die nachstehenden Beispiele bei einem Druck der umgebenden Atmosphäre, also etwa 1010 hPa, und bei Raumtemperatur, also bei etwa 20°C, bzw. bei einer Temperatur, die sich beim Zusammengeben der Reaktanden bei Raumtemperatur ohne zusätzliche Heizung oder Kühlung einstellt, durchgeführt.

Im Folgenden steht:

| | |
|---|---|
| Me für | Methylrest und |
| Et für | Ethylrest. |
| TA 187 = | N¹-(3-(Dimethylamino)propyl)-N³,N³-dimethylpropane-1,3-diamine (käuflich erwerblich bei der Fa. SIGMA-ALDRICH, MERCK, Darmstadt, Deutschland) |
| DA 102 = | N¹,N¹-Dimethylpropane-1,3-diamine (käuflich erwerblich bei der Fa. SIGMA-ALDRICH, MERCK, Darmstadt, Deutschland) |

### Beispiel 1 (Herstellung von Copolymer P1)

In einem 500 ml 3 Hals-Kolben mit Thermoelement, KPG-Rührer und Rückflusskühler wurden 100 g (20 mmol) Oxamidoesterterminiertes Silikonöl (5065 g/mol) vorgelegt. Bei 22 °C wurden unter Rühren innerhalb von 10 Minuten 3,74 g (20 mmol) TA 187 und anschließend 6,6 g (10 mmol) JEFFAMINE® ED-600 (erhältlich von Huntsman Performance Products, Everslaan 45, B-3078 Everberg, Belgium) zugegeben. Anschließend wurde noch 30 Minuten nachgerührt. Danach wurde das Reaktionsprodukt bei 40°C und einem Druck von 20 hPa vom entstandenen Alkohol befreit. Man erhielt 107 g eines opaquen, oligomeren Produktes P1 mit einem mittels SEC bestimmten Molekulargewicht von 13.857 g/mol.

### Beispiel 2 (Herstellung von Copolymer P2)

In einem 1000 ml 3 Hals-Kolben mit Thermoelement, KPG-Rührer und Rückflusskühler wurden 474 g (60 mmol) Oxamidoesterterminiertes Silikonöl (7.923 g/mol) vorgelegt. Bei 22 °C wurden unter Rühren innerhalb von 10 Minuten 11,22 g (60 mmol) TA 187 und anschließend 19,8 g (30 mmol) JEFFAMINE® ED-600 zugegeben. Anschließend wurde noch 30 Minuten nachgerührt. Danach wurde das Reaktionsprodukt bei 40°C und einem Druck von 20 hPa vom entstandenen Alkohol befreit. Man erhielt 502 g eines opaquen, oligomeren Produktes P2 mit einem mittels SEC bestimmten Molekulargewicht von 20.050 g/mol.

### Beispiel 3 (Herstellung von Copolymer P3)

In einem 500 ml 3 Hals-Kolben mit Thermoelement, KPG-Rührer und Rückflusskühler wurden 105 g (20 mmol) Oxamidoesterterminiertes Silikonöl (5175 g/mol) vorgelegt. Bei 22 °C wurden unter Rühren innerhalb von 10 Minuten 2,04 g (20 mmol) DA 102 und anschließend 6,6 g (10 mmol) JEFFAMINE® ED-600 zugegeben. Anschließend wurde noch 30 Minuten nachgerührt. Danach wurde das Reaktionsprodukt bei 40 °C und einem Druck von 20 hPa vom entstandenen Alkohol befreit. Man erhielt 111 g eines klaren, oligomeren Produktes P3 mit einem mittels SEC bestimmten Molekulargewicht von 11.690 g/mol.

### Beispiel 4 (Herstellung von Copolymer P4)

In einem 500 ml 3 Hals-Kolben mit Thermoelement, KPG-Rührer und Rückflusskühler wurden 158 g (20 mmol) Oxamidoesterterminiertes Silikonöl (7.923 g/mol) vorgelegt. Bei 22 °C wurden unter Rühren innerhalb von 10 Minuten 3,74 g (20 mmol) TA 187 und anschließend 9,0 g (10 mmol) JEFFAMINE® ED-900 (erhältlich von Huntsman Performance Products, Everslaan 45, B-3078 Everberg, Belgium) zugegeben. Anschließend wurde noch 30 Minuten nachgerührt. Danach wurde das Reaktionsprodukt bei 40 °C und einem Druck von 20 hPa vom entstandenen Alkohol befreit. Man erhielt 169 g eines klaren, oligomeren Produktes P4 mit einem mittels SEC bestimmten Molekulargewicht von 14.676 g/mol.

### Beispiel 5 (Herstellung von Copolymer P5)

In einem 500 ml 3 Hals-Kolben mit Thermoelement, KPG-Rührer und Rückflusskühler wurden 100 g (19 mmol) Oxamidoesterterminiertes Silikonöl (5175 g/mol) vorgelegt. Bei 22 °C wurden unter Rühren innerhalb von 10 Minuten 3,61 g (19 mmol) TA 187 und anschließend 8,7 g (9,6 mmol) JEFFAMINE® ED-900 zugegeben. Anschließend wurde noch 30 Minuten nachgerührt. Danach wurde das Reaktionsprodukt bei 40 °C und einem Druck von 20 hPa vom entstandenen Alkohol befreit. Man erhielt 108 g eines opaquen, oligomeren Produktes P5 mit einem mittels SEC bestimmten Molekulargewicht von 11.201 g/mol.

### Beispiel 6a (Herstellung von Copolymer P6a)

In einem 500 ml 3 Hals-Kolben mit Thermoelement, KPG-Rührer und Rückflusskühler wurden 100 g (19 mmol) Oxamidoesterterminiertes Silikonöl (5175 g/mol) vorgelegt. Bei 22 °C wurden unter Rühren innerhalb von 10 Minuten 1,94 g (19 mmol) DA 102 und anschließend 8,7 g (9,6 mmol) JEFFAMINE® ED-900 zugegeben. Anschließend wurde noch 30 Minuten nachgerührt. Danach wurde das Reaktionsprodukt bei 40 °C und einem Druck von 20 hPa vom entstandenen Alkohol befreit. Man erhielt 108 g eines klaren, oligomeren Produktes P6a mit einem mittels SEC bestimmten Molekulargewicht von 11.201 g/mol.

### Beispiel 6b (Herstellung von Copolymer P6b)

In einem 500 ml 3 Hals-Kolben mit Thermoelement, KPG-Rührer und Rückflusskühler wurden 100 g (19 mmol) Oxamidoesterterminiertes Silikonöl (5175 g/mol) vorgelegt. Bei 22 °C wurden unter Rühren innerhalb von 10 Minuten 8,7 g (9,6 mmol) JEFFAMINE® ED-900 und anschließend 1,94 g (19 mmol) DA 102 zugegeben. Anschließend wurde noch 30 Minuten nachgerührt. Danach wurde das Reaktionsprodukt bei 40 °C und einem Druck von 20 hPa vom entstandenen Alkohol befreit. Man erhielt 109 g eines opaquen, oligomeren Produktes P6b mit einem mittels SEC bestimmten Molekulargewicht von 12.461 g/mol.

Die eingesetzten Molverhältnisse der Edukte bei der Herstellung der Silicon-Copolymere sowie das Molekulargewicht Mn der erhaltenen Silicon-Copolymere P1 bis P5 und deren Aussehen sind für die Beispiele 1 bis 5 in Tabelle 1 zusammengefasst.

**Tabelle 1:**

| Co-polymer | Silicone-Oxalat-Öl Mn in [g/mol] | | JEFFAMINE® | | Aminstopper | | Mn in [g/mol] | Aussehen |
|---|---|---|---|---|---|---|---|---|
| | 5.000 | 8.000 | ED-600 | ED-900 | TA 187 | DA 102 | | |
| P1 | 2 | | 1 | | 2 | | 13.857 | Opak |
| P2 | | 2 | 1 | | 2 | | 20.050 | Opak |
| P3 | 2 | | 1 | | | 2 | 11.690 | Klar |
| P4 | | 2 | | 1 | 2 | | 14.676 | Klar |
| P5 | 2 | | | 1 | 2 | | 11.201 | Opak |

### Beispiel 8 (Vergleichsversuch):

WACKER FINISH CT 78 E ist eine Makroemulsion eines aminofunktionellen Siliconöls, (erhältlich von WACKER CHEMIE AG, München, Deutschland) mit einem Festgehalt von 40%.

Die in Tabelle 3 angegebene Einsatzmenge wird durch Verdünnen mit Wasser hergestellt und mit Essigsäure, 80%ig (erhältlich bei Brenntag GmbH, München, Deutschland) auf pH 4,5 eingestellt und mit einem Foulard (MATHIS AG, Oberhasli, Schweiz) auf einer Baumwoll-Wirkware und einem Baumwoll-Polyester-Mischgewebe gemäß den Vorgaben aus Tabelle 1 appliziert.

### Beispiel 9:

21,2 g P1 werden in 4.7 g Diethylenglykolmonobutylether (erhältlich bei Sigma-Aldrich Chemie GmbH, Taufkirchen, Deutschland) und 4.1 g Tridecylalkoholethoxylat (erhältlich als LUTENSOL® TO von BASF SE, Ludwigshafen) gemischt und anschließend mit 70,0 g Wasser langsam verdünnt und mit Essigsäure, 80%ig auf pH 4,5 eingestellt.

Die in Tabelle 3 angegebene Einsatzmenge wird durch Verdünnen mit Wasser hergestellt und mit einem Foulard auf einer Baumwoll-Wirkware und einem Baumwoll-Polyester-Mischgewebe gemäß den Vorgaben aus Tabelle 2 appliziert.

### Beispiel 10:

21,2 g P2 werden in 4.7 g Diethylenglykolmonobutylether und 4.1 g Tridecylalkoholethoxylat gemischt und anschließend mit 70,0 g Wasser langsam verdünnt und mit Essigsäure, 80%ig auf pH 4,5 eingestellt.

Die in Tabelle 3 angegebene Einsatzmenge wird durch Verdünnen mit Wasser hergestellt und mit einem Foulard auf einer Baumwoll-Wirkware und einem Baumwoll-Polyester-Mischgewebe gemäß den Vorgaben aus Tabelle 2 appliziert.

### Beispiel 11:

21,2 g P3 werden in 4.7 g Diethylenglykolmonobutylether und 4.1 g Tridecylalkoholethoxylat gemischt und anschließend mit 70,0 g Wasser langsam verdünnt und mit Essigsäure, 80%ig auf pH 4,5 eingestellt.

Die in Tabelle 3 angegebene Einsatzmenge wird durch Verdünnen mit Wasser hergestellt und mit einem Foulard auf einer Baumwoll-Wirkware und einem Baumwoll-Polyester-Mischgewebe gemäß den Vorgaben aus Tabelle 2 appliziert.

### Beispiel 12:

21,2 g P4 werden in 4.7 g Diethylenglykolmonobutylether und 4.1 g Tridecylalkoholethoxylat gemischt und anschließend mit 70,0 g Wasser langsam verdünnt und mit Essigsäure, 80%ig auf pH 4,5 eingestellt.

Die in Tabelle 3 angegebene Einsatzmenge wird durch Verdünnen mit Wasser hergestellt und mit einem Foulard auf einer Baumwoll-Wirkware und einem Baumwoll-Polyester-Mischgewebe gemäß den Vorgaben aus Tabelle 2 appliziert.

### Beispiel 13:

21,2 g P5 werden in 4.7 g Diethylenglykolmonobutylether und 4.1 g Tridecylalkoholethoxylat gemischt und anschließend mit 70,0 g Wasser langsam verdünnt und mit Essigsäure, 80%ig auf pH 4,5 eingestellt.

Die in Tabelle 3 angegebene Einsatzmenge wird durch Verdünnen mit Wasser hergestellt und mit einem Foulard auf einer Baumwoll-Wirkware und einem Baumwoll-Polyester-Mischgewebe gemäß den Vorgaben aus Tabelle 2 appliziert.

### Anwendungstechnische Tests:

Zur Textilausrüstung wurde eine gebleichte, unausgerüstete Webware PES/CO 65/35 Twill mit einem Flächengewicht von 215g/m² sowie unausgerüstete Maschenware 100% CO Interlock mit einem Flächengewicht von 190 g/m² verwendet.

Als Referenz diente eine Ausrüstung mit einer 40%igen Standard-Silicon-Weichmacheremulsion (Macroemulsion eines aminofunktionellen Polydimethylsiloxans) käuflich erwerblich bei der Firma WACKER CHEMIE AG unter dem Handelsnamen FINISH CT 78 E, sowie mit Wasser geklotzte und getrocknete Ware (= Blindwert).

Der Stoff wurde mit der jeweiligen Flotte getränkt, mit einem Zweiwalzenfoulard abgequetscht, aufgespannt und in einem MATHIS-Laborspannrahmen bei 150°C drei Minuten getrocknet (siehe Tabelle 2). Anschließend wurde die Ware mindestens 12 Stunden im Klimaraum bei 23°C und 62 % Luftfeuchtigkeit klimatisiert.

**Tabelle 2:**

| Textilart | Baumwoll-Wirkware (Interlock) (100% CO) | Baumwoll-Polyester Mischgewebe (65 PES / 35 CO) |
|---|---|---|
| Flottenaufnahme (4m/min; 4 bar) | 77% | 46% |
| Trocknen und Kondensieren | 3 min; 150°C | 3 min; 150°C |

### Bestimmungsmethoden für die Ergebnisse der Anwendungsbeispiele:

### Bestimmung des Weichgriffs (Griffbewertung) :

Da der Weichgriff von Textilien stark dem subjektiven Empfinden der Testpersonen unterliegt, kann nur eine Standardisierung der Randbedingungen, nicht aber der Bewertung erreicht werden. Um trotzdem eine Reproduzierbarkeit zu gewährleisten, wurden die ausgerüsteten Muster hinsichtlich ihres Weichgriffs beurteilt und in eine Rangfolge gebracht. Dazu wurden von vier Personen in Abhängigkeit der Anzahl der getesteten Muster Punkte vergeben, wobei die Höhe der Punktzahl mit dem Weichgriff korreliert. Das weichste Muster erhält die maximale Punktzahl, während das am wenigsten weiche Muster 0 Punkte erhält. Die Griffbewertung eines Musters errechnet sich somit als Mittelwert der jeweils auf dieses Muster entfallenen Punkte.

### Bestimmung der Tropfeneinsinkzeit:

Das ausgerüstete Muster wurde nach der Applikation des Siliconproduktes acht Stunden zur Akklimatisierung in einem Klimaraum bei einer Temperatur von 23°C und einer Luftfeuchtigkeit von 62% gelagert, dann wurde ein Tropfen entionisiertes Wasser aus einer Höhe von 1 cm auf die gespannte Stoffoberfläche gegeben und die Zeit bestimmt, nach der der Wassertropfen vom Stoff aufgesaugt war, längstens jedoch drei Minuten (180 Sekunden). Es wurden fünf Bestimmungen durchgeführt und der Mittelwert gebildet.

### Bestimmung der Vergilbung:

Der Grad der Vergilbung wurde mit einem Farbmeßgerät "spectroguide sphere gloss®" (BYK GARDNER, Geretsried, Deutschland) festgestellt. Hierbei wird die Textilprobe an drei unterschiedlichen Stellen vermessen und der Mittelwert bestimmt. Diese "Mittlere Vergilbung b+" wird mit der unbehandelten Probe verglichen.

Kleinere b+-Werte bedeuten eine abnehmende Vergilbung.

In Tabelle 3 sind für einige Anwendungsbeispiele die Ergebnisse des mittels Foulardverfahren ausgerüsteten Stoffs zusammengestellt.

**Tabelle 3:**

| Beispiele und Vergl. | Festgehalt in [%] | Einsatzmenge in [g/l] | Mittlere Vergilbung +b-Wert | Tropfentest Baumwoll-Wirkware in [s] | Tropfentest Baumwoll-Polyester-Mischgewebe in [s] | Weichgriff Baumwoll-Wirkware | Weichgriff Baumwoll-Polyester-Mischgewebe |
|---|---|---|---|---|---|---|---|
| FINISH CT 78E | 40 | 19,0 | 1,45 | >180 | >180 | 5 | 4 |
| Beisp. 9 | 30 | 25,0 | 1,27 | 4 | 12 | 3 | 2 |
| Beisp. 10 | 30 | 25,0 | 1,34 | 9 | 20 | 5 | 5 |
| Beisp. 11 | 30 | 25,0 | 1,28 | 5 | 32 | 6 | 5 |
| Beisp. 12 | 30 | 25,0 | 1,30 | 6 | 15 | 4 | 4 |
| Beisp. 13 | 30 | 25,0 | 1,31 | 3 | 12 | 2 | 2 |
| Blindwert | | | 1,20 | 0 | 2 | 0 | 0 |

Die mit den erfindungsgemäßen Silicon-Copolymeren ausgerüsteten Textilien vergilben im Vergleich zum Vergleichsprodukt (FINISH CT 78 E) weniger, sind hydrophil und weisen einen weichen Griff auf.

## Patentansprüche

1. Verfahren zur Behandlung von faserigen Substraten mit Zusammensetzungen enthaltend Silicon-Copolymere (A) der Formel (I) 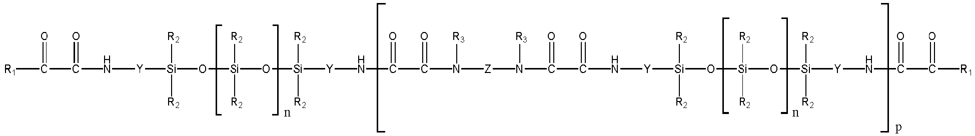 wobei
Y gleich oder verschieden ist und einen zweiwertigen Kohlenwasserstoffrest mit 1 bis 20 Kohlenstoffatomen, der ein oder mehrere Heteroatome, vorzugsweise Sauerstoff- oder Stickstoffatome, enthalten kann, bedeutet,
Z gleich oder verschieden ist und einen zweiwertigen eine Polyoxyalkylengruppe enthaltenden organischen Rest, vorzugsweise einen Rest der Formel -(R⁶O)_{w}-R⁷- , bedeutet,
R¹ gleich oder verschieden ist und ein Rest der Formel -N(R⁴)-R⁵ (IV') oder -O-R⁵ (V') ist,
R² gleich oder verschieden ist und einen einwertigen Kohlenwasserstoffrest mit 1 bis 18 Kohlenstoffatomen, der Halogen- oder Sauerstoffatome enthalten kann, bedeutet,
R³ gleich oder verschieden ist und ein Wasserstoffatom oder einen einwertigen Kohlenwasserstoffrest mit 1 bis 20 Kohlenstoffatomen bedeutet,
R⁴ ein Wasserstoffatom, einen C₁₋₁₈-Alkylrest oder einen Kohlenwasserstoffrest mit 4 bis 18 Kohlenstoffatomen, der ein oder mehrere Sauerstoff- oder Stickstoffatome enthält, bedeutet und
R⁵ einen C₁₋₁₈-Alkylrest oder einen Kohlenwasserstoffrest mit 4 bis 18 Kohlenstoffatomen, der ein oder mehrere Sauerstoff- oder Stickstoffatome enthält, bedeutet, oder R⁴ und R⁵ in Formel (IV') zusammen einen zweiwertigen Kohlenwasserstoffrest, der ein oder mehrere Sauerstoff- oder Stickstoffatome enthalten kann, bedeuten,
R⁶ gleich oder verschieden ist und einen C₁-C₁₀-Alkylenrest, vorzugsweise einen C₂-C₃-Alkylenrest, bevorzugt einen Ethylen- oder iso-Propylenrest bedeutet, und
R⁷ einen C₁-C₁₀-Alkylenrest, vorzugsweise einen C₂-C₃-Alkylenrest, bevorzugt einen Ethylen- oder iso-Propylenrest bedeutet,
n eine ganze Zahl von 10 bis 2000, vorzugsweise 10 bis 300, ist,
p eine ganze Zahl von 1 bis 5, vorzugsweise 1 bis 2, bevorzugt 1, ist und
w durchschnittlich 2,5 bis 80, vorzugsweise 10 bis 30, ist.

2. Verfahren nach Anspruch 1, **dadurch gekennzeichnet, dass** Y ein 1,3-Propylenrest ist.

3. Verfahren nach Anspruch 1 oder 2, **dadurch gekennzeichnet, dass** R¹ ein Rest der Formel -N(R⁴)-R⁵ (IV') ist, wobei R⁴ und R⁵ die in Anspruch 1 dafür angegebene Bedeutung haben.

4. Verfahren nach Anspruch 1, 2 oder 3, **dadurch gekennzeichnet, dass** als Zusammensetzungen wässrige Emulsionen enthaltend Silicon-Copolymere (A) gemäß Anspruch 1, 2 oder 3, Emulgatoren (B) und/oder Coemulgatoren (B') und Wasser (C)
eingesetzt werden.

5. Verfahren nach einem der Ansprüche 1 bis 4, **dadurch gekennzeichnet, dass** die Zusammensetzungen auf die faserigen Substrate aufgebracht werden und die so behandelten faserigen Substrate bei Temperaturen von vorzugsweise 20 bis 200°C trocknen gelassen werden.

6. Verfahren nach einem der Ansprüche 1 bis 5, **dadurch gekennzeichnet, dass** die faserigen Substrate Textilien sind.

7. Faserige Substrate, die nach dem Verfahren gemäß den Ansprüchen 1 bis 6 behandelt werden.

8. Silicon-Copolymere (A) der Formel (I) 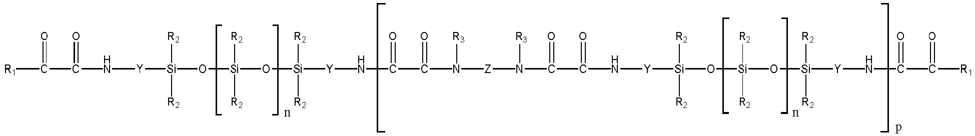 wobei
Y gleich oder verschieden ist und einen zweiwertigen Kohlenwasserstoffrest mit 1 bis 20 Kohlenstoffatomen, der ein oder mehrere Heteroatome, vorzugsweise Sauerstoff- oder Stickstoffatome, enthalten kann, bedeutet,
Z gleich oder verschieden ist und einen zweiwertigen eine Polyoxyalkylengruppe enthaltenden organischen Rest, vorzugsweise einen Rest der Formel -(R⁶O)_{w}-R⁷-, bedeutet,
R¹ gleich oder verschieden ist und ein Rest der Formel -N(R⁴)-R⁵ (IV') ist,
R² gleich oder verschieden ist und einen einwertigen Kohlenwasserstoffrest mit 1 bis 18 Kohlenstoffatomen, der Halogen- oder Sauerstoffatome enthalten kann, bedeutet,
R³ gleich oder verschieden ist und ein Wasserstoffatom oder einen einwertigen Kohlenwasserstoffrest mit 1 bis 20 Kohlenstoffatomen bedeutet,
R⁴ ein Wasserstoffatom, einen C₁₋₁₈-Alkylrest oder einen Kohlenwasserstoffrest mit 4 bis 18 Kohlenstoffatomen, der ein oder mehrere Sauerstoff- oder Stickstoffatome enthält, bedeutet und
R⁵ einen C₁₋₁₈-Alkylrest oder einen Kohlenwasserstoffrest mit 4 bis 18 Kohlenstoffatomen, der ein oder mehrere Sauerstoff- oder Stickstoffatome enthält, bedeutet, oder R⁴ und R⁵ in Formel (IV') zusammen einen zweiwertigen Kohlenwasserstoffrest, der ein oder mehrere Sauerstoff- oder Stickstoffatome enthalten kann, bedeuten,
R⁶ gleich oder verschieden ist und einen C₁-C₁₀-Alkylenrest, vorzugsweise einen C₂-C₃-Alkylenrest, bevorzugt einen Ethylen- oder iso-Propylenrest bedeutet, und
R⁷ einen C₁-C₁₀-Alkylenrest, vorzugsweise einen C₂-C₃-Alkylenrest, bevorzugt einen Ethylen- oder iso-Propylenrest bedeutet,
n eine ganze Zahl von 10 bis 2000, vorzugsweise 10 bis 300, ist,
p eine ganze Zahl von 1 bis 5, vorzugsweise 1 bis 2, bevorzugt 1, ist und
w durchschnittlich 2,5 bis 80, vorzugsweise 10 bis 30, ist.

9. Silicon-Copolymere nach Anspruch 8, **dadurch gekennzeichnet, dass** Y ein 1,3-Propylenrest ist.

10. Verfahren zur Herstellung der Silicon-Copolymeren nach Anspruch 8 oder 9, **dadurch gekennzeichnet, dass**
(1) mit Oxamidoestergruppen terminierte Organopolysiloxane der Formel (II) 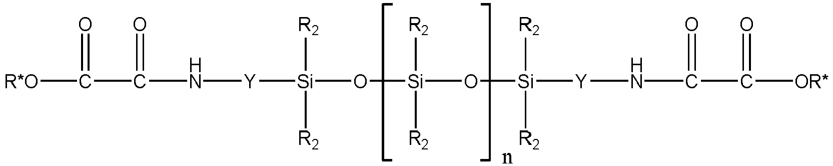
wobei R², Y und n die in Anspruch 8 dafür angegebene Bedeutung haben und
R* ein einwertiger Kohlenwasserstoffrest mit 1 bis 18 Kohlenstoffatomen oder ein Rest R⁵ ist, wobei R⁵ die in Anspruch 8 dafür angegebene Bedeutung hat, mit
(2) Polyetheraminen der Formel
R³HN-Z-NHR³ (III),
wobei R³ und Z die in Anspruch 8 dafür angegebene Bedeutung haben und
(3) primären oder sekundären Aminen der Formel
H-N(R⁴)-R⁵ (IV)
wobei R⁴ und R⁵ die in Anspruch 8 dafür angegebene Bedeutung haben,
umgesetzt werden.

11. Verfahren nach Anspruch 10, **dadurch gekennzeichnet, dass** Polyetheramine (2) in Mengen von 0,3 bis 0,8 Mol, vorzugsweise 0,4 bis 0,6, bevorzugt 0,5 Mol, Aminogruppe in (2) pro Mol Oxamidoestergruppe in Organopolysiloxan (1) eingesetzt werden.

12. Verfahren nach Anspruch 10 oder 11, **dadurch gekennzeichnet, dass** primäre oder Sekundäre Amine (3) in Mengen von 0,2 bis 0,7 Mol, vorzugsweise 0,4 bis 0,6 mol, bevorzugt 0,5 Mol, Aminogruppe in (3) pro Mol Oxamidoestergruppe in Organopolysiloxan (1) eingesetzt werden.

13. Zusammensetzungen, wobei die Zusammensetzungen wässrige Emulsionen sind, enthaltend Silicon-Copolymere (A) gemäß Anspruch 8 oder 9 oder hergestellt nach einem der Ansprüche 10 bis 12, Emulgatoren (B) und/oder Coemulgatoren (B') und Wasser (C).

## Claims

1. Method for treating fibrous substrates with compositions comprising silicone copolymers (A) of the formula (I) 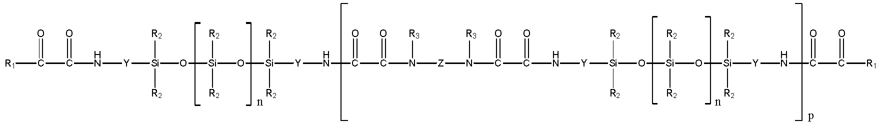 where
Y is identical or different and denotes a divalent hydrocarbon radical which has 1 to 20 carbon atoms and may comprise one or more heteroatoms, preferably oxygen or nitrogen atoms,
Z is identical or different and denotes an organic radical which contains a polyoxyalkylene group and is divalent, preferably a radical of the formula - (R⁶O)_{w}-R⁷-,
R¹ is identical or different and is a radical of the formula -N(R⁴)-R⁵ (IV') or -O-R⁵ (V'),
R² is identical or different and denotes a monovalent hydrocarbon radical which has 1 to 18 carbon atoms and may comprise halogen or oxygen atoms,
R³ is identical or different and is a hydrogen atom or a monovalent hydrocarbon radical having 1 to 20 carbon atoms,
R⁴ denotes a hydrogen atom, a C₁₋₁₈ alkyl radical or a hydrocarbon radical which has 4 to 18 carbon atoms and comprises one or more oxygen or nitrogen atoms, and
R⁵ denotes a C₁₋₁₈ alkyl radical or a hydrocarbon radical which has 4 to 18 carbon atoms and comprises one or more oxygen or nitrogen atoms, or R⁴ and R⁵ in formula (IV') together denote a divalent hydrocarbon radical which may comprise one or more oxygen or nitrogen atoms,
R⁶ is identical or different and denotes a C₁-C₁₀ alkylene radical, preferably a C₂-C₃ alkylene radical, more preferably an ethylene or isopropylene radical, and
R⁷ denotes a C₁-C₁₀ alkylene radical, preferably a C₂-C₃ alkylene radical, more preferably an ethylene or isopropylene radical,
n is an integer from 10 to 2000, preferably 10 to 300,
p is an integer from 1 to 5, preferably 1 to 2, more preferably 1, and
w is on average 2.5 to 80, preferably 10 to 30.

2. Method according to Claim 1, **characterized in that** Y is a 1,3-propylene radical.

3. Method according to Claim 1 or 2, **characterized in that** R¹ is radical of the formula -N(R⁴)-R⁵ (IV') where R⁴ and R⁵ have the definition indicated for them in Claim 1.

4. Method according to Claim 1, 2 or 3, **characterized in that** compositions used comprise aqueous emulsions comprising
silicone copolymers (A) according to Claim 1, 2 or 3, emulsifiers (B) and/or coemulsifiers (B') and water (C).

5. Method according to any of Claims 1 to 4, **characterized in that** the compositions are applied to the fibrous substrates and the fibrous substrates thus treated are left to dry at temperatures of preferably 20 to 200°C.

6. Method according to any of Claims 1 to 5, **characterized in that** the fibrous substrates are textiles.

7. Fibrous substrates treated by the method according to Claims 1 to 6.

8. Silicone copolymers (A) of the formula (I) 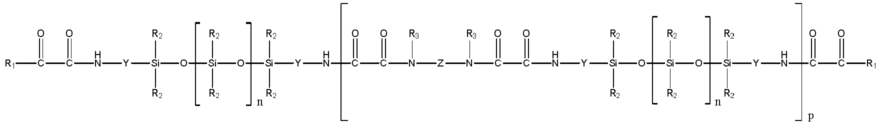 where
Y is identical or different and denotes a divalent hydrocarbon radical which has 1 to 20 carbon atoms and may comprise one or more heteroatoms, preferably oxygen or nitrogen atoms,
Z is identical or different and denotes an organic radical which contains a polyoxyalkylene group and is divalent, preferably a radical of the formula - (R⁶O)_{w}-R⁷-,
R¹ is identical or different and is a radical of the formula -N (R⁴)-R⁵ (IV'),
R² is identical or different and denotes a monovalent hydrocarbon radical which has 1 to 18 carbon atoms and may comprise halogen or oxygen atoms,
R³ is identical or different and is a hydrogen atom or a monovalent hydrocarbon radical having 1 to 20 carbon atoms,
R⁴ denotes a hydrogen atom, a C₁₋₁₈ alkyl radical or a hydrocarbon radical which has 4 to 18 carbon atoms and comprises one or more oxygen or nitrogen atoms, and
R⁵ denotes a C₁₋₁₈ alkyl radical or a hydrocarbon radical which has 4 to 18 carbon atoms and comprises one or more oxygen or nitrogen atoms, or R⁴ and R⁵ in formula (IV') together denote a divalent hydrocarbon radical which may comprise one or more oxygen or nitrogen atoms,
R⁶ is identical or different and denotes a C₁-C₁₀ alkylene radical, preferably a C₂-C₃ alkylene radical, more preferably an ethylene or isopropylene radical, and
R⁷ denotes a C₁-C₁₀ alkylene radical, preferably a C₂-C₃ alkylene radical, more preferably an ethylene or isopropylene radical,
n is an integer from 10 to 2000, preferably 10 to 300,
p is an integer from 1 to 5, preferably 1 to 2, more preferably 1, and
w is on average 2.5 to 80, preferably 10 to 30.

9. Silicone copolymers according to Claim 8, **characterized in that** Y is a 1,3-propylene radical.

10. Process for preparing the silicone copolymers according to Claim 8 or 9, **characterized in that**
(1) organopolysiloxanes terminated with oxamidoester groups, of the formula (II) 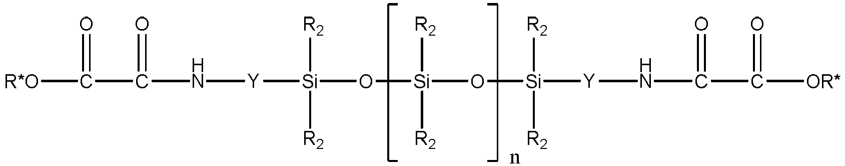
where R², Y and n have the definition indicated for them in Claim 8 and
R* is a monovalent hydrocarbon radical having 1 to 18 carbon atoms, or is a radical R⁵, where R⁵ has the definition indicated for it in Claim 8, are reacted with
(2) polyetheramines of the formula
R³HN-Z-NHR³ (III),
where R³ and Z have the definition indicated for them in Claim 8, and with
(3) primary or secondary amines of the formula
H-N(R⁴)-R⁵ (IV)
where R⁴ and R⁵ have the definition indicated for them in Claim 8.

11. Process according to Claim 10, **characterized in that** polyetheramines (2) are used in amounts of 0.3 to 0.8 mol, preferably 0.4 to 0.6, more preferably 0.5 mol, of amino group in (2) per mole of oxamidoester group in organopolysiloxane (1).

12. Process according to Claim 10 or 11, **characterized in that** primary or secondary amines (3) are used in amounts of 0.2 to 0.7 mol, preferably 0.4 to 0.6 mol, more preferably 0.5 mol, of amino group in (3) per mole of oxamidoester group in organopolysiloxane (1).

13. Compositions, the compositions being aqueous emulsions comprising
silicone copolymers (A) according to Claim 8 or 9 or prepared according to any of Claims 10 to 12, emulsifiers (B) and/or coemulsifiers (B') and
water (C).

## Revendications

1. Procédé pour le traitement de substrats fibreux avec des compositions contenant des copolymères (A) de silicone de formule (I) 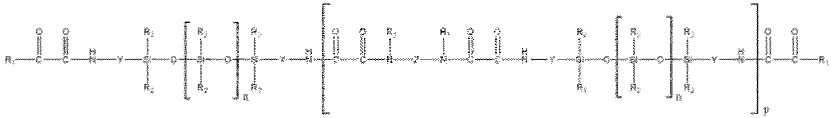
Y étant identique ou différent et signifiant un radical hydrocarboné divalent comportant 1 à 20 atomes de carbone, qui peut contenir un ou plusieurs hétéroatomes, de préférence des atomes d'oxygène ou d'azote,
Z étant identique ou différent et signifiant un radical organique divalent contenant un groupe polyoxyalkylène, de préférence un radical de formule -(R⁶O)_{w}-P⁷-,
R¹ étant identique ou différent et étant un radical de formule -N(R⁴)-R⁵ (IV') -O-R⁵ (V'),
R² étant identique ou différent et signifiant un radical hydrocarboné monovalent comportant 1 à 18 atomes de carbone, qui peut contenir des atomes d'halogène ou d'oxygène,
R³ étant identique ou différent et signifiant un atome d'hydrogène ou un radical hydrocarboné monovalent comportant 1 à 20 atomes de carbone,
R⁴ signifiant un atome d'hydrogène, un radical C₁-₁₈-alkyle ou un radical hydrocarboné comportant 4 à 18 atomes de carbone, qui contient un ou plusieurs atomes d'oxygène ou d'azote, et
R⁵ signifiant un radical C₁₋₁₈-alkyle ou un radical hydrocarboné comportant 4 à 18 atomes de carbone, qui contient un ou plusieurs atomes d'oxygène ou d'azote, ou R⁴ et R⁵ dans la formule (IV') signifiant ensemble un radical hydrocarboné divalent qui peut contenir un ou plusieurs atomes d'oxygène ou d'azote,
R⁶ étant identique ou différent et signifiant un radical C₁₋₁₀-alkylène, de préférence un radical C₂₋₃-alkylène, préférablement un radical éthylène ou iso-propylène, et
R⁷ signifiant un radical C₁₋₁₀-alkylène, de préférence un radical C₂₋₃-alkylène, préférablement un radical éthylène ou isopropylène,
n étant un nombre entier de 10 à 2 000, de préférence de 10 à 300,
p étant un nombre entier de 1 à 5, de préférence 1 ou 2, préférablement 1, et
w étant en moyenne 2,5 à 80, de préférence 10 à 30.

2. Procédé selon la revendication 1, **caractérisé en ce que** Y est un radical 1,3-propylène.

3. Procédé selon la revendication 1 ou 2, **caractérisé en ce que** R¹ est un radical de formule -N(R⁴)-R⁵ (IV'), R⁴ et R⁵ possédant la signification indiquée pour ceux-ci dans la revendication 1.

4. Procédé selon la revendication 1, 2 ou 3, **caractérisé en ce que** des émulsions aqueuses contenant des copolymères (A) de silicone selon la revendication 1, 2 ou 3, des émulsifiants (B) et/ou des co-émulsifiants (B') et de l'eau (C) sont utilisées en tant que compositions.

5. Procédé selon l'une quelconque des revendications 1 à 4, **caractérisé en ce que** les compositions sont appliquées sur les substrats fibreux et les substrats fibreux ainsi traités sont laissés à sécher à des températures de préférence de 20 à 200 °C.

6. Procédé selon l'une quelconque des revendications 1 à 5, **caractérisé en ce que** les substrats fibreux sont des textiles.

7. Substrats fibreux qui sont traités par le procédé selon les revendications 1 à 6.

8. Copolymères (A) de silicone de formule (I) 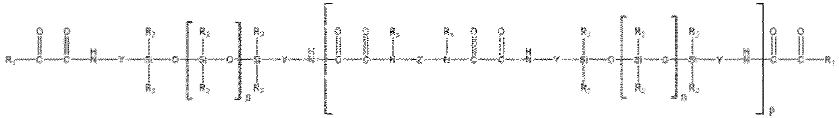
Y étant identique ou différent et signifiant un radical hydrocarboné divalent comportant 1 à 20 atomes de carbone, qui peut contenir un ou plusieurs hétéroatomes, de préférence des atomes d'oxygène ou d'azote,
Z étant identique ou différent et signifiant un radical organique divalent contenant un groupe polyoxyalkylène, de préférence un radical de formule -(R⁶O)_{w}-R⁷-,
R¹ étant identique ou différent et étant un radical de formule -N(R⁴)-R⁵ (IV'),
R² étant identique ou différent et signifiant un radical hydrocarboné monovalent comportant 1 à 18 atomes de carbone, qui peut contenir des atomes d'halogène ou d'oxygène,
R³ étant identique ou différent et signifiant un atome d'hydrogène ou un radical hydrocarboné monovalent comportant 1 à 20 atomes de carbone,
R⁴ signifiant un atome d'hydrogène, un radical C₁-₁₈-alkyle ou un radical hydrocarboné comportant 4 à 18 atomes de carbone, qui contient un ou plusieurs atomes d'oxygène ou d'azote, et
R⁵ signifiant un radical C₁₋₁₈-alkyle ou un radical hydrocarboné comportant 4 à 18 atomes de carbone, qui contient un ou plusieurs atomes d'oxygène ou d'azote, ou R⁴ et R⁵ dans la formule (IV') signifiant ensemble un radical hydrocarboné divalent qui peut contenir un ou plusieurs atomes d'oxygène ou d'azote,
R⁶ étant identique ou différent et signifiant un radical C₁₋₁₀-alkylène, de préférence un radical C₂₋₃-alkylène, préférablement un radical éthylène ou iso-propylène, et
R⁷ signifiant un radical C₁₋₁₀-alkylène, de préférence un radical C₂₋₃-alkylène, préférablement un radical éthylène ou isopropylène,
n étant un nombre entier de 10 à 2 000, de préférence de 10 à 300,
p étant un nombre entier de 1 à 5, de préférence 1 ou 2, préférablement 1, et
w étant en moyenne 2,5 à 80, de préférence 10 à 30.

9. Copolymères de silicone selon la revendication 8, **caractérisés en ce que** Y est un radical 1,3-propylène.

10. Procédé pour la préparation des copolymères de silicone selon la revendication 8 ou 9, **caractérisé en ce que**
(1) des organopolysiloxanes terminés par des groupes de type ester d'oxamide de formule (II) 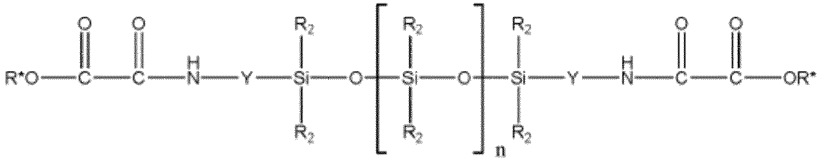
R², Y et n possédant la signification indiquée pour ceux-ci dans la revendication 8 et
R* étant un radical hydrocarboné monovalent comportant 1 à 18 atomes de carbone ou un radical R⁵, R⁵ possédant la signification indiquée pour celui-ci dans la revendication 8,
sont transformés avec
(2) des polyétheramines de formule
R³HN-Z-NHR³ (III),
R³ et Z possédant la signification indiquée pour ceux-ci dans la revendication 8 et
(3) des amines primaires ou secondaires de formule
H-N(R⁴)-R⁵ (IV)
R⁴ et R⁵ possédant la signification indiquée pour ceux-ci dans la revendication 8.

11. Procédé selon la revendication 10, **caractérisé en ce que** des polyétheramines (2) sont utilisées en des quantités de 0,3 à 0,8 mole, de préférence 0,4 à 0,6 mole, préférablement 0,5 mole, de groupe amino dans (2) par mole de groupe de type ester d'oxamide dans l'organopolysiloxane (1).

12. Procédé selon la revendication 10 ou 11, **caractérisé en ce que** des amines primaires ou secondaires (3) sont utilisées en des quantités de 0,2 à 0,7 mole, de préférence 0,4 à 0,6 mole, préférablement 0,5 mole, de groupe amino dans (3) par mole de groupe de type ester d'oxamide dans l'organopolysiloxane (1) .

13. Compositions, les compositions étant des émulsions aqueuses contenant des copolymères (A) de silicone selon la revendication 8 ou 9 ou préparés selon l'une quelconque des revendications 10 à 12, des émulsifiants (B) et/ou des co-émulsifiants (B') et de l'eau (C).
